# EUROPEAN PATENT SPECIFICATION

(11) **EP 1 088 691 B1**
(45) Date of publication and mention of the grant of the patent: **29.11.2006**
(21) Application number: 00121133.3
(22) Date of filing: 28.09.2000
(51) Int. Cl.: B60J 5/04

(54) **Vehicle door**
Fahrzeugtür
Porte de véhicule

(30) Priority: 28.09.1999 DE 19946311
(43) Date of publication of application: 04.04.2001
(73) Proprietor: Meritor Automotive GmbH, 60314 Frankfurt (DE)
(72) Inventor: Grimm, Rainer, 60599 Frankfurt (DE); Köllner, Harald, 63674 Altenstadt (DE); Strauss, Klaus-Dieter, 38110 Braunschweig (DE); Wurm, Georg, 61350 Bad Homburg (DE); Drewniok, Daniel, 60385 Frankfurt (DE); Herwig, Arnd G., 96148 Baunach (DE); Hof, Patrick, 35043 Marburg (DE); Dobson, Simon Blair, Kent CT20 3TA (GB); Keyes, Gregory, Handsworth Wood, Birmingham B20 2LJ (GB); Schang, Kenneth W., Plymouth, Michigan 48170 (US)
(74) Representative: GROSSE BOCKHORNI SCHUMACHER

(56) References cited:
- EP-A- 0 454 209
- DE-A- 1 655 656
- GB-A- 2 331 493
- US-A- 4 290 235
- US-A- 5 040 335
- US-A- 5 871 253

## Description

The invention pertains to a motor vehicle door with the features of the preamble of Claim 1. In this regard, we may be dealing with the driver, passenger, rear side and/or stern doors, and also with pivoting or also with sliding doors, in which both pivot hinges or sliding hinges are used for opening.

In conventional vehicle doors it is common to join the rigidness providing structural parts, like a support or carrier element or the lining elements, with various function parts or components providing the vehicle door functions, like window regulators etc. These individual parts or components have been manufactured and handled separately before. The functional parts of the door, such as a window crank and similar items, have been connected directly or indirectly to the support or carrier element. The support or carrier element has also been connected with hinges, hinge straps or similar movement elements and/or closing elements. The many single parts or components of a door mean a significant assembly expense for their assembly. They are associated in the worst case, with some strict manufacturing tolerances. On the other hand, rigidness of the vehicle door becomes an increasing demand the more its weight is reduced.

A vehicle door showing all features of the preamble of claim 1 is known from GB 1 116 359 A.

In order to reduce the number of single components while providing an inexpensive to make, light weight and durable structural part, a vehicle door with the features of Claim 1 is proposed. This means that a molded composite or sandwich part - hereinafter collectively called a foamed component - is manufactured as structural support or carrier of a vehicle door, which is characterized in that at least one of the function component carrying or supporting structural parts forms a completely shaped composite or sandwich part having a plastic based matrix and further having several of the function components or parts thereof included to serve as rigidness providing bodies, said bodies are molded in (completely or in part) into said plastic based matrix and connected to each other by virtue of said plastic based matrix. A vehicle door according to this invention can be comparably light in weight and of non-flexural design. Single-point attachments can be avoided, in favor of a considerable force distribution.

While vehicle doors made in one piece out of plastic are known per se in the art (DE 1 655 656 A), these known used doors make use of a steel plate being molded in. This steel plate is used to fix the function components thereon by standard methods like screwing or welding. This method has - as a consequence - the disadvantage of strong loads upon the molded part exerted by the function components. The further consequence is a rather heavy vehicle door when the plastic is made strong enough for carrying such loads.

The subject invention, however, is particularly useful to withstand the forces of drive and moving components on the structural parts of a vehicle door over the lifetime of the vehicle due to the combination of inherent stability and separate reinforcement bodies molded in to form the shaped composite or sandwich structural part of this invention. Watertightness is reached without additional measures.

It is particularly advantageous to select from the following group one or more functional components or parts thereof as rigidness providing bodies for the completely shaped composite or sandwich parts of a vehicle door according to the subject invention: rails or windowpane guides or channels or a drive ground plate or motor housing of a window regulator, speakers, crash pads or crash beams, a latch housing, an airbag system and/or other common functional components.

As a rule, window cranks require considerable assembly expense, since they consist of a whole series of point-attached single parts. The complete or partial embedding in the foam of the foamed component is particularly favorable, especially when a window guide profile or window guide channel is embedded in whole or in part in the foamed component. For guiding lowerable window panes, guides at the glass and at the vehicle door may be made of plastic only, but also of a combination of metal profiles encapsulated with plastic or of pure metal profiles.

While an in-molded crash beam is particularly useful close to the outer shell of the vehicle door, it may be - such as the crash pad - be in-molded close to the inner trim of the vehicle door.

The in-molded bodies, as a rule, will be of different type of material with respect to the plastic based matrix. However, said bodies may also be of the same material as the plastic based matrix and, further, may be made in one piece with the plastic based matrix.

A simple assembly and disassembly of a lowerable windowpane is possible due to a window holding niche provided on the door inside in the foamed component.

Additional details, properties and advantages of the subject of the present invention will arise from the subclaims and the following description of the included figure, in which the preferred design format of the vehicle door is presented as an example:

In the figures,
- Fig. 1: shows a vehicle door from the inner side in an perspective view;
- Fig. 2: shows the same vehicle door in a sectional view - section along line II-II of Fig. 1 - in a simplified way as a partial view;
- Fig. 3: shows an inner lining element or trim door panel with window guide rails and an airbag in vertical section;
- Fig. 4A: shows another structural part in form of a door module in side view (view A as shown in Fig. 4B and 4C);
- Fig. 4B: shows the same structural part in a section view along line C-C of Fig. 4A, and
- Fig. 4C: shows the same structural part in a section view along line C-C of Fig. 4A.

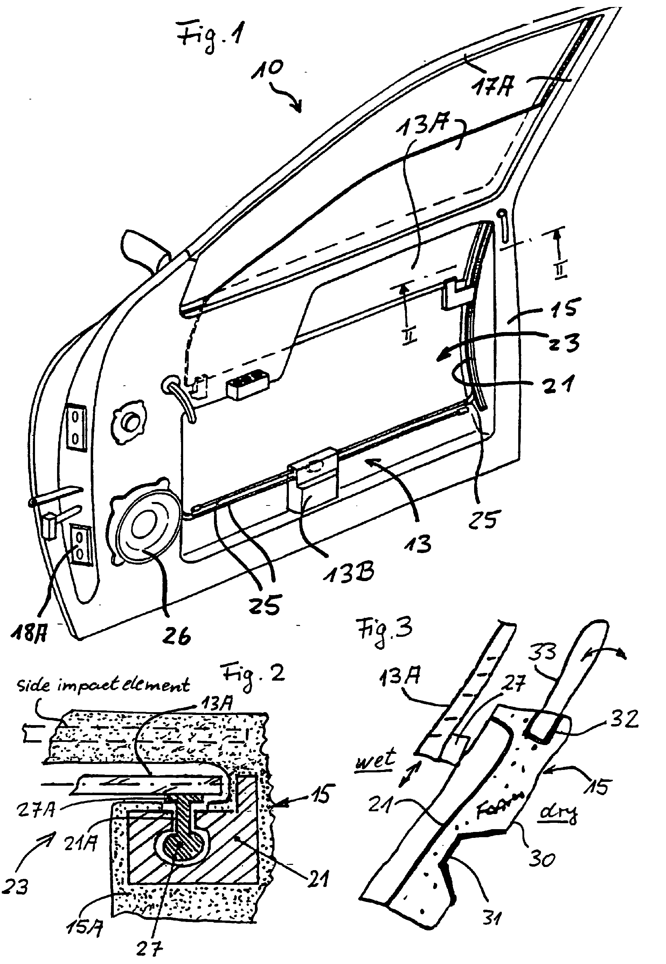

Figure 1 shows a passenger door of a motor vehicle in a view from the inside of the vehicle, with the inner lining element left off. The body of the vehicle door 10 illustrated in Figure 1 consists as a whole of a one-part, foamed component which represents a completely shaped composite or sandwich part 15, acting as structural carrier or support for the vehicle door. In the region 17A, which has a comparatively thin cross section, a metal frame for the closed windowpane 13A is used. In this region, the reinforcing element 17A is actually fully visible. Only its end regions are molded in. Function components of the vehicle door, such as two parallel windowpane guide profiles 21, are embedded in whole or in part in the foamed component 15. The same applies to the halves of the hinge 18A, a loudspeaker 26 and a door lock, as well as mirror adjuster and a window crank 13.

The window pane 13A is located in a partially lowered position in a windowpane holding niche 23, which is formed on the door inside of the vehicle door 10 and through which the installation and removal of the windowpane 13A is possible.

The window crank 13 has a drive motor 13B roughly in the middle in the region of the door threshold which is molded in into the foamed component 15 with its ground plate. From there, flexible drive features 25 lead horizontally to the lateral, approximately vertically running window guide profiles 21 following the curvature of the curved windowpane, and the drive features are tightly joined on one side to the lower edge of the window pane 13A.

As can be seen form Fig. 2, the window guide profile, which is nearly completely embedded in a foamed plastic matrix 15A, has a channel with a smaller slot. A driven slider 27 is slidingly guided inside profile 21 and extends through slot 21A to be connected to windowpane 13A via base 27A.

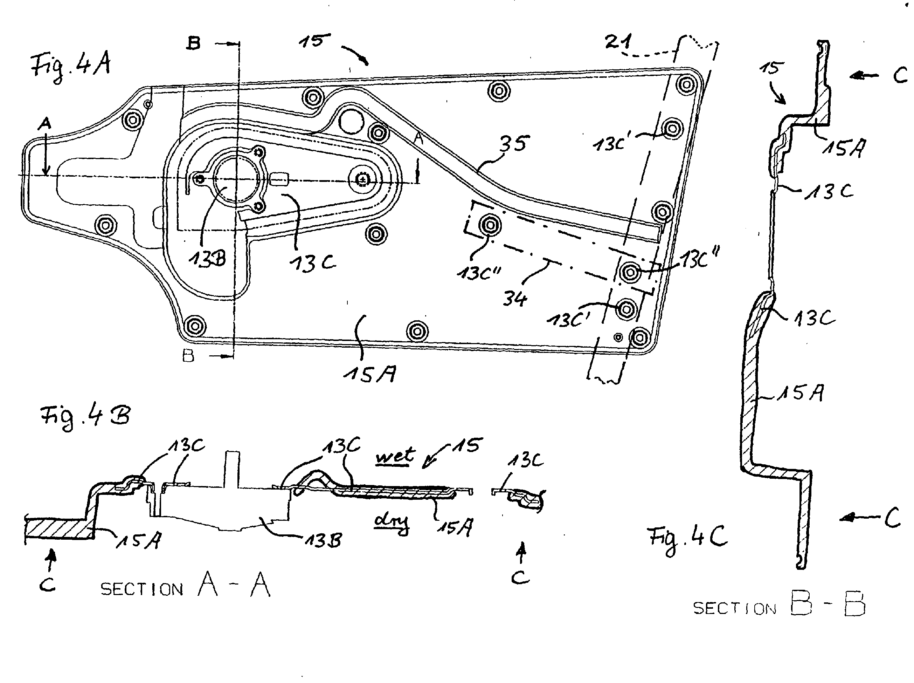

As can be seen from Fig. 3, a function component carrying or supporting structural part (foamed component 15) may be an inner lining element 30 of the vehicle door made of foam. In this embodiment, three function components are molded in in the foamed component 15, i. e. a housing 31 for storing personal equipments, a housing 32 for storing a shoulder or head airbag 33 (the airbag being shown in inflated upright position), and a window pane guide profile 21 having a slider 27 for being guided along the window pane guide profile 21. In this respect the inner lining element 30 is taking over a double function, acting as inner trim and door module at the same time.

As shown in Fig. 4A to 4C, the foamed component 15 forms a door module for closing the access opening in a inner sheet metal of a vehicle door. As can best be seen from Fig. 4B and 4C, a base plate 13C is molded in in the foamed plastic material 15A and carries motor 13B of a window regulator. Further molded in base plates 13C' and 13C'' support window pane guide profile 21, shown in dashed lines, and window regulator guide rail 34, shown in dashed-dotted lines, respectively. Further, a channel 35 for electrical wiring is molded in as well.

In all embodiments, the foamed plastic material 15A may be made of any standard product and method. Clearly, this matrix must be strong enough by itself to avoid breaking of the same. In this respect, fiber reinforcement or the like may be used within the matrix according to standard techniques.

It is also possible that a scrap steel sheet, made from one of said carrier or lining elements when providing access holes to the wet space of a vehicle door, forms a rigidness providing body.

### List of reference numerals

- 10: Vehicle door
- 13: Windowpane crank
- 13A: Windowpane
- 13B: Motor
- 13C: Base plate
- 13C': Base plate
- 13C": Base plate
- 15: Foamed component
- 15A: Foamed plastic material
- 17A: Reinforcing element
- 18A: Hinge half
- 21: Windowpane guide profile/channel
- 21A: Slot
- 23: Windowpane holding niche
- 25: Drive unit
- 26: Loudspeaker
- 27: Slider
- 27A: Base
- 30: Inner lining element
- 31: Housing
- 32: Housing
- 33: Airbag
- 34: Window regulator guide rail
- 35: Wire channel

## Claims

1. Vehicle door (10) comprising:
a body acting as a structural carrier or support (15) for providing rigidness of the vehicle door (10),
the support (15) comprising at least one hinge unit (18A) and/or closing element, and
the vehicle door (10) also comprising function components for providing vehicle door functions including movable parts like a window pane (13A) with a regulator (13B), wherein the support (15) serves as a support of at least one of the function components or parts thereof, and
the support (15) that supports a function component forms a shaped composite or sandwich part (15),
**characterized in that**
the shaped composite or sandwich part (15) has a plastic based matrix into which several of the function components or parts thereof are included to serve as rigidness providing bodies; and the rigidness providing bodies are molded in into the plastic based matrix and connected to each other by virtue of the plastic based matrix.

2. Vehicle door according to Claim 1, **characterized in that** said function components or parts thereof comprise at least one of the rails or windowpane guide profiles or channels (21) performing a guide bar and/or drive function and/or a drive ground plate or motor housing of a window regulator.

3. Vehicle door according to Claim 2, **characterized in that** said composite or sandwich part comprises a windowpane receiving niche (23) which is open for the door inside.

4. Vehicle door according to anyone of the Claims 1 to 3, **characterized in that** said function component is an airbag system.

5. Vehicle door according to anyone of the Claims 1 to 4, **characterized in that** said function component is a speaker.

6. Vehicle door according to anyone of the Claims 1 to 5, **characterized in that** said function component is a crash pad or crash beam.

## Patentansprüche

1. Fahrzeugtür (10), umfassend:
einen Hauptkörper, der als Strukturträger oder -stütze (15) dient, um der Fahrzeugtür (10) Steifheit zu verleihen,
wobei die Stütze (15) wenigstens eine Scharniereinheit (18A) und/oder ein Schließelement umfasst, und wobei die Fahrzeugtür (10) ferner Funktionselemente zum Bereitstellen von Fahrzeugtürfunktionen umfasst, einschließlich beweglicher Teile wie einer Fensterscheibe (13A) mit einem Regler (13B), wobei die Stütze (15) als Stütze wenigstens eines der Funktionselemente oder von Teilen davon dient, und
wobei die Stütze (15), die ein Funktionselement stützt, ein geformtes Verbund- oder Sandwich-Teil (15) bildet,
**dadurch gekennzeichnet, dass**
das geformte Verbund- oder Sandwich-Teil (15) eine kunststoffbasierte Grundsubstanz aufweist, in die mehrere der Funktionselemente oder Teile davon enthalten sind, um als Steifheit gebende Körper zu dienen, und wobei die Steifheit gebenden Körper in die kunststoffbasierte Grundsubstanz eingeformt und untereinander durch die kunststoffbasierte Grundsubstanz verbunden sind.

2. Fahrzeugtür nach Anspruch 1, **dadurch gekennzeichnet, dass** die Funktionselemente oder Teile davon wenigstens eine der Schienen oder Fensterführungsprofile oder Kanäle (21), die eine Führungsleisten- und/oder Antriebsfunktion ausführen, und/oder eine Antriebsgrundplatte oder ein Motorgehäuse eines Fensterreglers umfassen.

3. Fahrzeugtür nach Anspruch 2. **dadurch gekennzeichnet, dass** das Verbund-oder Sandwich-Teil eine Scheibenaufnahmenische (23) umfasst, die türinnenseitig offen ist.

4. Fahrzeugtür nach einem der Ansprüche 1 bis 3, **dadurch gekennzeichnet, dass** das Funktionselement ein Airbagsystem ist.

5. Fahrzeugtür nach einem der Ansprüche 1 bis 4 **dadurch gekennzeichnet, dass** das Funktionselement ein Lautsprecher ist.

6. Fahrzeugtür nach einem der Ansprüche 1 bis 5, **dadurch gekennzeichnet, dass** das Funktionselement ein Stoßschutzpolster oder eine Stoßschutzstange ist.

## Revendications

1. Porte de véhicule (10), comprenant :
un corps agissant comme soutien ou support structurel (15) pour apporter de la rigidité à la porte de véhicule (10) ;
le support (15) comprenant au moins une unité de charnière (18A) et/ou un élément de fermeture, et la porte de véhicule (10) comprenant également des composants de fonction pour équiper la porte de véhicule de fonctions, le composant de fonction comprenant des parties mobiles telles qu'une vitre (13A) équipée d'un régulateur (13B), le support (15) servant à supporter au moins un des composants de fonction ou des parties de celui-ci, et
le support (15) qui supporte un composant de fonction formant une partie composite ou sandwich moulée (15),
**caractérisée en ce que**
la partie composite ou sandwich moulée (15) présente une matrice à base de plastique dans laquelle plusieurs des composants de fonction ou plusieurs parties de ceux-ci sont prévus pour servir de corps apportant de la rigidité, et les corps apportant de la rigidité sont moulés dans la matrice à base de plastique et sont reliés les uns aux autres au moyen de la matrice à base de plastique.

2. Porte de véhicule selon la revendication 1,
**caractérisée en ce que**
les composants de fonction ou des parties de ceux-ci comprennent au moins un des rails ou profils ou canaux de guidage de vitre (21) exécutant une fonction de barre de guidage et/ou d'entraînement, et/ou un boîtier d'une plaque ou d'un moteur d'entraînement d'un régulateur de fenêtre.

3. Porte de véhicule selon la revendication 2,
**caractérisée en ce que**
la partie composite ou sandwich comprend une niche de réception de vitre (23) qui est ouverte pour l'intérieur de la porte.

4. Porte de véhicule selon l'une quelconque des revendications 1 à 3,
**caractérisée en ce que**
le composant de fonction est un système de coussin gonflable.

5. Porte de véhicule selon l'une quelconque des revendications 1 à 4,
**caractérisée en ce que**
le composant de fonction est un haut-parleur.

6. Porte de véhicule selon l'une quelconque des revendications 1 à 5,
**caractérisée en ce que**
le composant de fonction est un rembourrage de sécurité ou une barre de protection.
